Europäisches Patentamt

European Patent Office

Office européen des brevets

(11) Veröffentlichungsnummer: **0 506 110 A1**

## (12) EUROPÄISCHE PATENTANMELDUNG

(21) Anmeldenummer: **92105356.7**

(51) Int. Cl.5: **C02F 1/48**

(22) Anmeldetag: **27.03.92**

(30) Priorität: **28.03.91 DE 9103875 U**

(43) Veröffentlichungstag der Anmeldung:
**30.09.92 Patentblatt 92/40**

(84) Benannte Vertragsstaaten:
**AT BE CH DE DK ES FR GB GR IT LI LU MC
NL PT SE**

(71) Anmelder: **Bossert, Gerdi
Heinrich-Hertz-Strasse 28
W-7730 VS-Villingen(DE)**

(72) Erfinder: **Bossert, Karl
Heinrich-Hertz-Strasse 28
W-7730 VS Villingen(DE)**

(74) Vertreter: **Liska, Horst, Dr.-Ing. et al
Patentanwälte H. Weickmann,K. Fincke,F.A.
Weickmann, B. Huber,H. Liska,J. Prechtel,B.
Böhm, Kopernikusstrasse 9 Postfach 86 08
20
W-8000 München 86(DE)**

(54) **Gerät zur magnetischen Behandlung von Flüssigkeiten, insb. Wasser.**

(57) Zur magnetischen Behandlung von Flüssigkeiten, insbesondere Wasser, wird ein Gerät vorgeschlagen, das in einem eine Durchflußkammer (15) für die Flüssigkeit umschließenden Gehäuse (1) mehrere in Durchflußrichtung zwischen einer Einlaßöffnung (3) und einer Auslaßöffnung (5) der Durchflußkammer (15) hintereinander angeordnete Permanentmagnete (9, 11) enthält, die die Flüssigkeit einem Magnetfeld mit in Durchflußrichtung schwankender Flußdichte aussetzen. Die Permanentmagnete (9, 11) sind so bemessen und/oder angeordnet, daß, in Durchflußrichtung gesehen, die Maximalwerte der Flußdichte, die sich zwischen den in Durchflußrichtung aufeinanderfolgenden Magnetpolen (17) einstellt, insbesondere periodisch schwanken. Die Permanentmagnete (9, 11) sind zweckmäßigerweise in einer Reihe angeordnet und haben vorzugsweise periodisch schwankenden Durchmesser bzw. periodisch schwankende axiale Länge. Es handelt sich bevorzugt um Permanentmagnete auf der Basis seltener Erden.

Fig.1

Die Erfindung betrifft ein Gerät zur magnetischen Behandlung von Flüssigkeiten, insbesondere Wasser, mit einem eine Durchflußkammer für die Flüssigkeit umschließenden Gehäuse und mehreren in Durchflußrichtung zwischen einer Einlaßöffnung und einer Auslaßöffnung der Durchflußkammer hintereinander angeordneten Permanentmagneten, die die Flüssigkeit einem Magnetfeld mit in Durchflußrichtung schwankender Flußdichte aussetzen.

Es hat sich gezeigt, daß in Wasser, welches einem Magnetfeld ausgesetzt wird, die Kalkstruktur so weit verändert wird, daß Kalkanlagerungen an wasserführenden Systemen weitgehend vermieden werden können. Auch bei anderen Flüssigkeiten, wie zum Beispiel Getränken, haben sich geschmackliche Verbesserungen oder eine Verbesserung der Haltbarkeit ergeben. Bei flüssigen Brennstoffen konnten die Verbrennungseigenschaften verbessert werden.

Bekannte Geräte zur magnetischen Behandlung von Flüssigkeiten erzeugen das Magnetfeld in Form eines Wechselfelds mit Hilfe wechselstromgespeister Magnetspulen. Es ist ferner bekannt, Permanentmagnete zur Erzeugung des Wechselfelds einzusetzen. Bei einem bekannten Gerät der letztgenannten Art ist in einem zylindrischen Gehäuserohr eine Vielzahl zylindrischer Permanentmagnete in einer Reihe hintereinander angeordnet. Die Permanentmagnete sind in axialer Richtung polarisiert und schließen zwischen sich jeweils Polscheiben aus weichmagnetischem Material ein. Benachbarte Permanentmagnete liegen hierbei jeweils mit gleichnamigen Magnetpolen an der dazwischen angeordneten Polscheibe an, so daß sich längs der Permanentmagnetreihe in dem radial zwischen der Permanentmagnetreihe und dem Gehäuserohr verlaufenden Durchflußraum ein Magnetfeld mit aufgrund der wechselnden Polarität schwankender Flußdichte einstellt.

Es ist Aufgabe der Erfindung, die Wirksamkeit der magnetischen Behandlung der Flüssigkeit zu erhöhen.

Diese Aufgabe wird erfindungsgemäß dadurch gelöst, daß die Permanentmagnete so bemessen und/oder angeordnet sind, daß, in Durchflußrichtung gesehen, die Maximalwerte der Flußdichte, die sich zwischen den in Durchflußrichtung aufeinanderfolgenden Magnetpolen einstellt, schwanken. Auf diese Weise wird erreicht, daß die zu behandelnde Flüssigkeit nacheinander unterschiedlich starken Magnetfeldern ausgesetzt wird, was überraschenderweise das Behandlungsergebnis verbessert.

Es hat sich als zweckmäßig erwiesen, wenn die Permanentmagnete so bemessen und/oder angeordnet sind, daß zumindest in einem Teil Durchflußwegs der Abstand der Orte maximaler Flußdichte in Durchflußrichtung schwankt. Auf diese Weise läßt sich die Verweilzeit der zu behandelnden Flüssigkeit in Gebieten unterschiedlicher Feldstärke variieren. Als besonders günstig hat es sich in diesem Zusammenhang erwiesen, wenn die Permanentmagnete so bemessen und/oder angeordnet sind, daß der Abstand der Orte maximaler Flußdichte in Durchflußrichtung zumindest angenähert periodisch schwankt und zwar insbesondere so, daß sich wenigstens zwei Perioden unterschiedlicher Länge ergeben. Auf diese Weise wird die im Strömungsweg sich bewegende Flüssigkeit entsprechend ihrer Strömungsgeschwindigkeit trotz des von den einzelnen Permanentmagneten erzeugten magnetischen Gleichfelds einem mehrfrequenten magnetischen Wechselfeld ausgesetzt.

Die Verteilung der Abstände der Orte maximaler Flußdichte zwischen Einlaßöffnung und Auslaßöffnung der Durchflußkammer kann in Durchflußrichtung unsymmetrisch sein, ist aber zweckmäßigerweise symmetrisch gewählt.

In einer konstruktiv besonders einfachen Variante umfaßt das Gerät ein insbesondere zylindrisches Gehäuserohr und eine Vielzahl in einer Reihe hintereinander in dem Gehäuserohr angeordneter, in Achsrichtung des Gehäuserohrs polarisierter, insbesondere zylindrischer Permanentmagnete, die zwischen sich Polscheiben aus weichmagnetischem Material einschließen, wobei benachbarte Permanentmagnete jeweils mit gleichnamigen Magnetpolen an der dazwischen angeordneten Polscheibe anliegen und der Durchflußraum radial zwischen der Permanentmagnetreihe und dem Gehäuserohr verläuft. Bei einem solchen dem Prinzip nach bekannten Gerät läßt sich ein Magnetfeld mit in Durchflußrichtung schwankenden Maximalwerten der Flußdichte dadurch erreichen, daß zur Änderung der Maximalwerte der Flußdichte die Länge der Permanentmagnete in Achsrichtung variiert wird und/oder die Dicke der Polscheiben in Achsrichtung variiert wird und/oder die Durchmesserdifferenz, mit der die Polscheiben über daran anliegende Permanentmagnete radial vorstehen, in Achsrichtung variiert wird und/oder die Maximalwerte der Flußdichte der einzelnen Permanentmagnete in Achsrichtung variiert wird. Während sich durch Ändern der Länge der Permanentmagnete oder der Dicke der Polscheiben die Periodenlänge, mit der das Magnetfeld schwankt, variieren läßt, beeinflußt eine Änderung der Durchmesserdifferenz zwischen Polscheibe und daran anliegenden Permanentmagneten das Strömungsverhalten der Flüssigkeit im Durchflußraum. Bei einer Änderung der Durchmesserdifferenz ändert sich, gesehen im Axiallängsschnitt, die radiale Breite der Durchflußkammer sprunghaft mit der Folge, daß am Durchmessersprung Strömungswirbel angeregt werden. Es hat sich gezeigt, daß die Verwirbelung das Behandlungsergebnis verbessert.

Zur Erzeugung derartiger Durchmessersprünge haben die Polscheiben zweckmäßigerweise gleichen Durchmesser, und der Durchmesser zumindest eines Teils der paarweise auf gegenüberliegenden Seiten der Polscheiben anliegenden Permanentmagnete ist unterschiedlich gewählt. Dadurch entstehen zwischen benachbarten Polscheiben Behandlungskammern unterschiedlicher radialer Höhe, in welchen, bei ausreichender radialer Tiefe zum Zentrum hin zumindest angenähert homogene Magnetfelder besonders hoher Flußdichte entstehen. Dies hat sich als günstig für das Behandlungsergebnis erwiesen.

Um mit möglichst wenig Grundtypen von Permanentmagneten die räumlichen Eigenschaften des Magnetfelds variieren zu können, besteht zumindest ein Teil der Permanentmagnete aus mehreren gleichsinnig gepolt aneinandergereihten Kreisscheiben aus permanentmagnetischem Material.

Die von den Permanentmagneten erzeugte Flußdichte soll möglichst hoch sein. Vorzugsweise bestehen die Permanentmagnete deshalb aus einem Magnetmaterial auf der Basis seltener Erden, wie zum Beispiel auf der Basis eines Samarium-Kobalt-Materials oder eines Neodym-Eisen-Bor-Materials.

Der Durchflußkammer ist zweckmäßigerweise ein Filter in Durchflußrichtung nachgeschaltet. Das Filter, bei dem es sich um ein gewöhnliches mechanisches Filter mit einer Porengröße zum Beispiel zwischen 25 und 75 μm handeln kann, mindert den durch die magnetische Behandlung des Wassers in seiner Struktur veränderten Kalkanteil im Wasser. Die Umwandlungswirkung läßt sich verstärken, wenn in Serie zur Durchflußkammer zusätzlich ein die Flüssigkeit einem elektrischen Feld, insbesondere einem periodischen Impulsfeld, aussetzendes Gerät dem Filter vorgeschaltet ist.

Im folgenden werden Ausführungsbeispiele der Erfindung anhand einer Zeichnung näher erläutert. Hierbei zeigen:

Fig. 1 bis 4      schematische Varianten von Geräten zur magnetischen Behandlung von Flüssigkeiten, insbesondere Wasser und

Fig. 5      eine unter Verwendung von Geräten gemäß einer der Figuren 1 bis 5 aufgebauten Anlage zur Minderung des Kalkgehalts von Wasser.

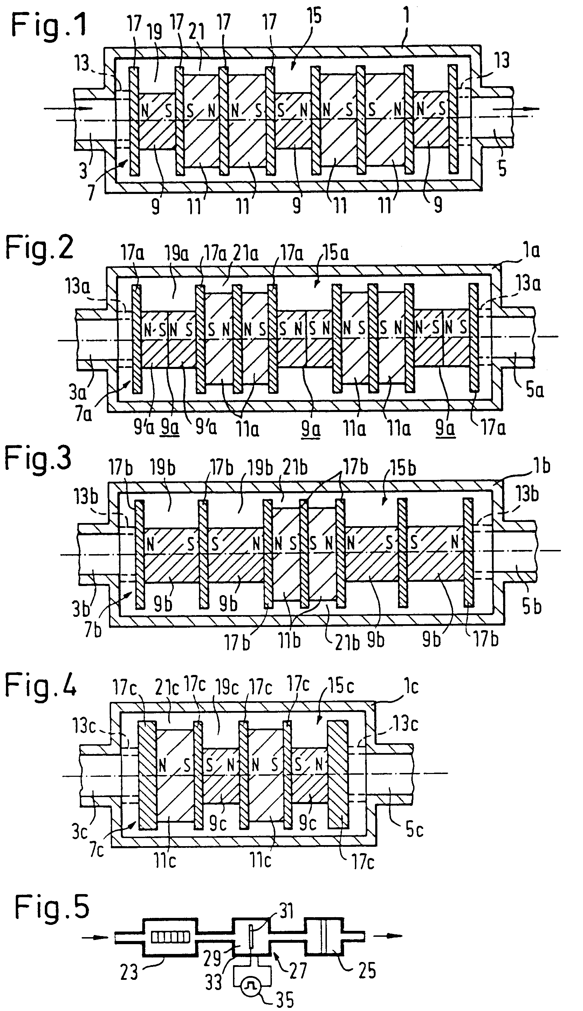

Das in Fig. 1 dargestellte Gerät zur magnetischen Behandlung von Flüssigkeiten umfaßt ein zylindrisches Gehäuserohr 1, vorzugsweise aus einem nicht magnetischen Material, wie zum Beispiel Kunststoff oder Messung, welches an seinen axial sich gegenüberliegenden Stirnenden eine Zuflußöffnung 3 und eine Abflußöffnung 5 hat. In dem Gehäuserohr 1 ist eine Säule 7 aus einer Vielzahl gleichachsig in einer Reihe hintereinander angeordneter Permanentmagnete 9, 11 angeordnet. Nicht im einzelnen dargestellte Halterungen 13 halten die Säule 7 koaxial zum Gehäuserohr 1, wobei der Außendurchmesser der Säule 7 so bemessen ist, daß zwischen der Säule 7 und dem Gehäuserohr 1 ein die Einlaßöffnung 3 mit der Auslaßöffnung 5 verbindender ringraumförmiger Durchflußraum 15 verbleibt, in welchem die von der Einlaßöffnung 3 zur Auslaßöffnung 5 strömende Flüssigkeit aufeinanderfolgend dem Magnetfeld der einzelnen Permanentmagnete 9, 11 ausgesetzt wird.

Die Permanentmagnete 9, 11 haben Zylinderform und sind axial polarisiert. Sie legen mit ihren durch die Buchstaben N und S bezeichneten Magnetpolen an kreisförmigen Polscheiben 17 an und zwar so, daß an jeder der Polscheiben 17 nur gleichnamige Pole anliegen. Auf diese Weise ergibt sich ein Durchflußrichtung abwechselnd sich umpolendes Magnetfeld. Um eine möglichst hohe maximale magnetische Flußdichte zwischen aufeinanderfolgenden Polscheiben 17 zu erreichen, bestehen die Permanentmagnete 9, 11 aus einem Magnetmaterial auf der Basis seltener Erden, insbesondere einem ferrimagnetischen Material.

Bei dem Gerät der Fig. 1 schwankt der Maximalwert der magnetischen Flußdichte in Durchflußrichtung. Hierzu wechseln in Durchflußrichtung Permanentmagnete 9 mit einem ersten Durchmesser periodisch mit Permanentmagneten 11 mit einem zweiten, größeren Durchmesser ab. Der Durchmesser der Polscheiben 17 ist seinerseits größer als der zweite Durchmesser. Die axiale Länge der Permanentmagnete 9, 11 ist jeweils gleich, ebenso wie die Dicke der Polscheiben 17. Im einzelnen sind zwischen zwei durchmesserkleineren Permanentmagnete 9 jeweils zwei durchmessergrößere Permanentmagnete 11 vorgesehen. Die Anordnung ist insgesamt zur Mitte des Durchflußwegs zwischen Einlaßöffnung 3 und Auslaßöffnung 5 symmetrisch. Aufgrund des unterschiedlichen Durchmessers der Permanentmagnete 9, 11 entstehen zwischen benachbarten Polscheiben 17 Behandlungskammern 19 bzw. 21 unterschiedlicher radialer Tiefe und damit unterschiedlicher Homogenität bzw. Inhomogenität des Magnetfelds. Die unterschiedlich weit radial über die Permanentmagnete 9 bzw. 11 radial vorstehenden Polscheiben 17 sorgen für eine wechselnde Verwirbelung der durch den Durchflußraum 15 strömenden Flüssigkeit.

Durch geeignete Bemessung der Durchmesserverhältnisse von Permanentmagnet 9 bzw. 11 und Polscheibe 17 läßt sich erreichen, daß die Flüssigkeit sowohl nahezu homogenen Feldern als auch stark inhomogenen Feldern ausgesetzt wird. Die mehrfachperiodische Anordnung der Permanentmagnete 9 einerseits und 11 andererseits sorgt dafür, daß die Flüssigkeit aufgrund ihrer Strömung einem mehrfrequenten quasi-wechselnden Magnetfeld ausgesetzt ist.

Die Figuren 2 bis 4 zeigen Varianten des Geräts nach Fig. 1, die sich von dem Gerät nach Fig. 1 im wesentlichen nur durch die Anordnungsweise der Permanentmagnete unterscheiden. Gleichwirkende Teile sind deshalb mit den Bezugszahlen der Fig. 1 und zur Unterscheidung mit einem Buchstaben versehen. Zur näheren Erläuterung des Aufbaus und der Wirkungsweise wird auf die Beschreibung der Fig. 1 Bezug genommen.

Während beim Gerät der Fig. 1 die axialen Abmessungen der Permanentmagnete gleich sind, ist beim Gerät der Fig. 2 die axiale Höhe der durchmesserkleineren Permanentmagnete 9a größer als die axiale Höhe der durchmessergrößeren Permanentmagnete 11a. Auf diese Weise ergibt sich eine unterschiedliche Verteilung der Maximalwerte der Flußdichte zwischen benachbarten Polscheiben 17a. Die Permanentmagnete 9a bestehen aus mehreren mit ungleichnamigen Polen aneinanderliegenden Permanentmagnetscheiben 9'a, um mit einer möglichst geringen Anzahl Magnettypen unterschiedliche Konfigurationen aufbauen zu können. In gleicher Weise können nicht nur die Permanentmagnete 11a des Geräts der Fig. 2 aus mehreren Scheiben aufgebaut sein, sondern auch die Permanentmagnete der Geräte gemäß den Fig. 1, 3 und 4.

Fig. 3 zeigt eine Variante des Geräts, bei welcher im Unterschied zu den Geräten der Fig. 1 und 2 nicht nur jeweils mehrere durch durchmessergrößere Permanentmagnete 11b bestimmte Behandlungskammern 21b unmittelbar aufeinanderfolgen, sondern auch jeweils mehrere durch durchmesserkleinere Permanentmagnete 9b gebildete, radial tiefere Behandlungskammern 19b. Die Permanentmagnete 9b sind in axialer Richtung wiederum länger als die Permanentmagnete 11b. Das Verhältnis der Periodenlängen, in welchem die Orte maximaler magnetischer Flußdichte zwischen den Polscheiben 17b bei dem Gerät der Fig. 3 für die durchmesserkleineren Permanentmagnete 9b einerseits und die durchmessergrößeren Permanentmagnete 11b andererseits aufeinanderfolgen, unterscheidet sich damit von den Verhältniswerten der Geräte der Fig. 1 und 2.

Fig. 4 zeigt eine Variante des Geräts, die sich von den Geräten der Fig. 1 bis 3 in erster Linie dadurch unterscheidet, daß die Permanentmagnete 9c, 11c bezogen auf die Durchflußrichtung nicht symmetrisch angeordnet sind. Bei dem Gerät der Fig. 4 folgt jeweils auf einen durchmessergrößeren Permanentmagnet 11c ein durchmesserkleinerer Permanentmagnet 9c. Weiterhin sind die jeweils an den äußeren Enden der Säule 7c angeordneten Polscheiben 17c dicker bemessen, als die zwischen zwei Permanentmagneten 9c, 11c angeordneten Polscheiben. Ungleich dicke Polscheiben dieser Art können auch bei den Geräten der Fig. 1 bis 3 vorgesehen sein. Einzelne dickere Polscheiben können im Einzelfall alternativ oder auch zusätzlich zwischen benachbarten Permanentmagneten angeordnet werden.

Für die magnetische Behandlung von Wasser werden die vorstehend erläuterten Geräte vorzugsweise in Verbindung mit einem dem magnetischen Behandlungsgerät in Durchflußrichtung nachgeschalteten Filter benutzt, wie dies in Fig. 5 schematisch dargestellt ist. Das magnetische Behandlungsgerät ist in Fig. 5 allgemein mit 23, das Filter mit 25 bezeichnet. Das Filter, bei dem es sich um ein herkömmliches mechanisches Filter mit einer Porengröße zwischen beispielsweise 25 und 75 $\mu$ handeln kann, filtert zumindest einen Teil bei der magnetischen Behandlung des Wassers in seiner Struktur umgewandelten Kalkanteil ab. Durch geeignete Wahl der Porengröße des Filters 25 läßt sich so der Kalkgehalt des behandelten Wassers in gewünschter Weise einstellen. In Serie zu dem magnetischen Behandlungsgerät 23 ist dem Filter 25 zusätzlich ein an sich bekanntes elektrisches Behandlungsgerät 27 vorgeschaltet. Das zweckmäßigerweise zwischen dem magnetischen Behandlungsgerät 23 und dem Filter 25 angeordnete elektrische Behandlungsgerät 27 hat einen vom Wasser durchströmten Durchflußraum 29 mit einer durch eine Elektrode 31 und das elektrisch leitende Gerätegehäuse 33 gebildeten Elektrodenanordnung, an die ein elektrischer Impulsgenerator 35 angeschlossen ist. Der Impulsgenerator liefert eine periodische Impulsspannung mit einer Frequenz in der Größenordnung von 20 kHz, womit das den Durchflußraum 29 durchströmende Wasser einem entsprechenden periodisch sich ändernden elektrischen Feld ausgesetzt wird. Es hat sich gezeigt, daß die kombinierte magnetische und elektrische Behandlung des Wassers die Kalkumwandlungsrate beträchtlich erhöht.

**Patentansprüche**

1. Gerät zur magnetischen Behandlung von Flüssigkeiten, insbesondere Wasser, mit einem eine Durchflußkammer (15) für die Flüssigkeit umschließenden Gehäuse (1) und mehreren in Durchflußrichtung zwischen einer Einlaßöffnung (3) und einer Auslaßöffnung (5) der Durchflußkammer (15) hintereinander angeordneten Permanentmagneten (9, 11), die die Flüssigkeit einem Magnetfeld mit in Durchflußrichtung schwankender Flußdichte aussetzen, **dadurch gekennzeichnet,** daß die Permanentmagnete (9, 11) so bemessen und/oder angeordnet sind, daß, in Durchflußrichtung gesehen, die Maximalwerte der Flußdichte, die sich zwischen den in Durchflußrichtung aufeinanderfolgenden Magnetpolen (17) einstellt, schwanken.

2. Gerät nach Anspruch 1, dadurch gekennzeichnet, daß die Permanentmagnete (9, 11) so bemessen und/oder angeordnet sind, daß zumindest in einem Teil des Durchflußwegs der Abstand der Orte maximaler Flußdichte in Durchflußrichtung schwankt.

3. Gerät nach Anspruch 2, dadurch gekennzeichnet, daß die Permanentmagnete (9, 11) so bemessen und/oder angeordnet sind, daß der Abstand der Orte maximaler Flußdichte in Durchflußrichtung zumindest angenähert periodisch schwankt.

4. Gerät nach Anspruch 3, dadurch gekennzeichnet, daß die Permanentmagnete (9, 11) so bemessen und/oder angeordnet sind, daß die Abstände der Orte maximaler Flußdichte mit wenigstens zwei Perioden unterschiedlicher Länge schwanken.

5. Gerät nach Anspruch 2 bis 4, dadurch gekennzeichnet, daß die Permanentmagnete (9, 11) so bemessen und/oder angeordnet sind, daß die Verteilung der Abstände der Orte maximale Flußdichte zwischen Einlaßöffnung (3) und Auslaßöffnung (5) im wesentlichen symmetrisch ist.

6. Gerät nach einem der Ansprüche 1 bis 5, mit einem insbesondere zylindrischen Gehäuserohr (1) und einer Vielzahl in einer Reihe hintereinander in dem Gehäuserohr (1) angeordneter, in Achsrichtung des Gehäuserohrs (1) polarisierter, insbesondere zylindrischer Permanentmagnete (9, 11), die zwischen sich Polscheiben (17) aus weichmagnetischem Material einschließen, wobei benachbarte Permanentmagnete (9, 11) jeweils mit gleichnamigen Magnetpolen an dazwischen angeordneten Polscheiben (17) anliegen und der Durchflußraum (15) radial zwischen der Permanentmagnetreihe und dem Gehäuserohr (1) verläuft, **dadurch gekennzeichnet,** daß zur Änderung der Maximalwerte der Flußdichte die Länge der Permanentmagnete (9, 11) in Achsrichtung variiert ist und/oder die Dicke der Polscheiben (17) in Achsrichtung variiert ist und/oder die Durchmesserdifferenz, mit der die Polscheiben (17) über daran anliegende Permanentmagnete (9, 11) radial vorstehen, in Achsrichtung variiert ist und/oder die Maximalwerte der Flußdichte der einzelnen in Achsrichtung aufeinanderfolgenden Permanentmagnete (9, 11) variiert ist.

7. Gerät nach Anspruch 6, dadurch gekennzeichnet, daß die Polscheiben (17) gleichen Durchmesser haben und der Durchmesser zumindest eines Teils der paarweise auf gegenüberliegenden Seiten der Polscheiben (17) anliegenden Permanentmagnete (9, 11) unterschiedlich gewählt ist.

8. Gerät nach Anspruch 6 oder 7, dadurch gekennzeichnet, daß zumindest ein Teil der Permanentmagnete (9, 11) aus mehreren gleichsinnig gepolt aneinandergereihten Kreisscheiben aus permanentmagnetischem Material besteht.

9. Gerät nach einem der Ansprüche 1 bis 8, dadurch gekennzeichnet, daß die Permanentmagnete (9, 11) aus Magnetmaterial auf der Basis seltener Erden bestehen.

10. Gerät nach einem der Ansprüche 1 bis 9, dadurch gekennzeichnet, daß der Durchflußkammer (15) ein Filter (25) in Durchflußrichtung nachgeschaltet ist.

11. Gerät nach Anspruch 10, dadurch gekennzeichnet, daß in Serie zur Durchflußkammer (15) ein die Flüssigkeit einem elektrischen Feld, insbesondere einem periodischen Impulsfeld aussetzendes Gerät (27) dem Filter (25) vorgeschaltet ist.

EP 0 506 110 A1

Fig.1

Fig.2

Fig.3

Fig.4

Fig.5

6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X Y | WO-A-8 503 649 (KRONENBERG ET AL) <br> * Seite 4 - Seite 7; Abbildungen * <br> --- | 1-4 <br> 9,10,11 | C02F1/48 |
| Y | EP-A-0 352 213 (LIQUITECH HOLDING S.A.) <br> * Spalte 1, Zeile 61 - Zeile 63 * <br> --- | 9 | |
| Y | DE-U-9 004 033 (GERDI BOSSERT) 28. Februar 1991 <br> * Seite 3, Zeile 33 - Seite 4, Zeile 4 * <br> * Seite 4, Zeile 27 - Zeile 32 * <br> * Seite 9, Zeile 19 - Zeile 23; Ansprüche 5,15 * <br> --- | 10,11 | |
| A,P | EP-A-0 423 827 (GERDI BOSSERT) <br> * Spalte 11, Zeile 19 - Zeile 41 * <br> --- | 10,11 | |
| A | EP-A-0 277 112 (MÜNZING) <br> * Abbildung 3 * <br> --- | 1 | |
| A | CH-A-587 194 (VERMEIREN) <br> * Abbildung 4 * | 1 | |
|  | ----- | | **RECHERCHIERTE SACHGEBIETE (Int. Cl.5 )** <br><br> C02F |

Der vorliegende Recherchenbericht wurde für alle Patentansprüche erstellt

| Recherchenort | Abschlußdatum der Recherche | Prüfer |
|---|---|---|
| DEN HAAG | 19 MAI 1992 | KASPERS H.M.C. |